# EUROPEAN PATENT APPLICATION

(11) **EP 4 644 267 A1**
(43) Date of publication of application: **05.11.2025**
(21) Application number: 22970015.8
(22) Date of filing: 27.12.2022
(51) Int. Cl.: B64U 10/16, B64D 9/00, B64U 101/64

(54) **FLYING OBJECT**

(71) Applicant: Kubota Corporation, Osaka 556-8601 (JP)
(72) Inventor: ISHIKAWA Naohiro, Sakai-shi, Osaka 590-0908 (JP)
(74) Representative: Cabinet Beau de Loménie
(86) International application number: PCT/JP2022/048152
(87) International publication number: WO 2024/142221

(57) **Abstract**

This aerial vehicle flies while carrying a load 8. The aerial vehicle includes a body portion 2 having a plurality of rotors 3, and a load attachment member 40 that is connected to the body portion 2, supports the load 8, and adjusts the posture of the load 8.

## Description

### Technical Field

The present invention relates to an aerial vehicle that flies using rotors and is capable of carrying a load.

### Background Art

As one method for enabling an aerial vehicle (unmanned aerial vehicle) to carry a load, there is a method of fixing the load to a body portion of the aerial vehicle, as shown in Patent Document 1. Another possible method for enabling an aerial vehicle to carry a load is a method of suspending the load from the aerial vehicle.

While an aerial vehicle flies, downwash is generated by rotors. In the case where a load is suspended from the aerial vehicle, the suspended load may be affected by the downwash, and the load and the wires supporting the load may swing like a pendulum. When the load and the wires swing, the stability of the aerial vehicle decreases, making it difficult to stably control the aerial vehicle.

For this reason, the load is generally fixed to the aerial vehicle.

### Prior Art Document

### Patent Document

Patent Document 1: JP 3204505U

### Disclosure of the Invention

### Problem to be Solved by the Invention

However, fixing the load to the aerial vehicle makes the process of attaching and detaching the load complicated, and requires the aerial vehicle to land in order to attach or detach the load, thereby making it difficult to attach or detach the load efficiently. Therefore, it is desirable to suspend the load from the aerial vehicle while also stabilizing the load.

An object of the present invention is to suspend a load from an aerial vehicle while also stabilizing the posture of the load.

### Means for Solving Problem

In order to achieve the aforementioned object, an aerial vehicle according to an aspect of the present invention is an aerial vehicle configured to fly while carrying a load, the aerial vehicle including: a body portion having a plurality of rotors; and a load attachment member configured to be connected to the body portion, support the load, and adjust a posture of the load.

With this configuration, the load attachment member can stabilize the posture of the load suspended from the aerial vehicle by adjusting the posture of the load.

Also, a configuration is possible in which the load attachment member is supported by the body portion via a plurality of support members, and the load attachment member adjusts the posture of the load by adjusting a length of at least one of the support members from the body portion to the load attachment member.

With this configuration, the posture of the load can be adjusted by adjusting the length of the support member, and the posture of the load can be easily stabilized.

Also, a configuration is possible in which the aerial vehicle further includes a posture sensor configured to detect the posture of the load, and the load attachment member adjusts the posture of the load based on a detection result of the posture sensor.

With this configuration, the posture sensor can detect that the load is inclined, and the load attachment member can adjust the posture of the load so as to suppress inclination of the load. As a result, the load can be easily and accurately kept horizontal, and the posture of the load can be stabilized.

Also, a configuration is possible in which the load attachment member stabilizes the posture of the load with use of airflow generated by the rotors.

With this configuration, the load attachment member can easily stabilize the posture of the load with use of airflow (downwash) generated by the rotors.

Also, a configuration is possible in which the load attachment member includes an inclined portion inclined in such a manner as to move toward the body portion while extending toward a central portion of the load attachment member.

With this configuration, airflow (downwash) generated by the rotors flows along the inclined portion to the region outward of the load. This suppresses the influence of downwash on the load, and suppresses swinging of the load. As a result, due to having the inclined portion, the load attachment member can stabilize the posture of the load.

Also, a configuration is possible in which the load attachment member includes an inclined portion inclined in such a manner as to move away the body portion while extending toward a central portion of the load attachment member.

With this configuration, the inclined portion of the load attachment member is pressed downward by airflow (downwash) generated by the rotors. Accordingly, the load is pressed by the load attachment member, and swinging of the load is suppressed. As a result, due to having the inclined portion, the load attachment member can stabilize the posture of the load.

Also, a configuration is possible in which the load attachment member has at least a part that is deformable, and is further configured to deform between a state in which the inclined portion is formed and a state in which the inclined portion is not formed.

With this configuration, the inclined portion can be set to an optimum state according to the state of the load, for example, and the posture of the load can be stabilized easily and accurately.

Also, a configuration is possible in which the aerial vehicle further includes a posture sensor configured to detect the posture of the load, and the inclined portion of the load attachment member becomes deformed based on a detection result of the posture sensor.

With this configuration, the posture sensor detects that the load is inclined, and the inclination angle of the inclined portion of the load attachment member is adjusted according to the inclination of the load. As a result, the load attachment member can accurately suppress the influence of downwash on the load, and can accurately press the load to accurately stabilize the posture of the load.

Also, a configuration is possible in which the load attachment member includes at least a portion overlapped with at least one of the rotors in a plan view.

With this configuration, the load attachment member can accurately deflect airflow (downwash) generated by the rotors, and can accurately press the load with use of the downwash. As a result, the posture of the loaded object can be stabilized easily and accurately.

Also, a configuration is possible in which the plurality of rotors include a main rotor and a sub rotor, and the load attachment member is overlapped with the main rotor in a plan view.

The main rotor generates more downwash to generate lift. With the above configuration, the load attachment member can efficiently receive the downwash generated by the main rotor. Therefore, the posture of the loaded object can be easily stabilized.

Also, a configuration is possible in which the plurality of rotors include a main rotor and a sub rotor, and the load attachment member is overlapped with the sub rotor in a plan view.

Downwash is also generated by the sub rotor. With the above configuration, the load attachment member can efficiently receive the downwash generated by the sub rotor. Therefore, the posture of the loaded object can be stabilized.

Also, a configuration is possible in which the load attachment member is configured by a plurality of members.

With this configuration, the load attachment members can be arranged efficiently, and the posture of the load can be accurately stabilized.

Also, a configuration is possible in which the plurality of rotors include a main rotor and a sub rotor, and the load is carried in such a manner as to have a center of gravity overlapped with the main rotor in a plan view.

With this configuration, downwash flows toward the center of gravity of the load, thereby enabling the posture of the load to be accurately stabilized.

### Brief Description of the Drawings

FIG. 1 is a diagram illustrating a configuration of an aerial vehicle that suspends a load using a load attachment member.
FIG. 2 is a diagram illustrating a configuration of a load attachment member included in an aerial vehicle according to a second embodiment.
FIG. 3 is a diagram illustrating a planar configuration of the load attachment member according to the second embodiment.
FIG. 4 is a diagram illustrating the planar configuration of the load attachment member according to the second embodiment.
FIG. 5 is a diagram illustrating a configuration of the load attachment member included in the aerial vehicle according to the second embodiment.
FIG. 6 is a diagram illustrating the configuration of the load attachment member included in the aerial vehicle according to the second embodiment.
FIG. 7 is a diagram illustrating the configuration of the load attachment member included in the aerial vehicle according to the second embodiment.
FIG. 8 is a diagram illustrating an arrangement of the load attachment member included in the aerial vehicle according to the second embodiment.
FIG. 9 is a diagram illustrating the configuration of the load attachment member included in the aerial vehicle according to the second embodiment.

### Best Mode for Carrying out the Invention

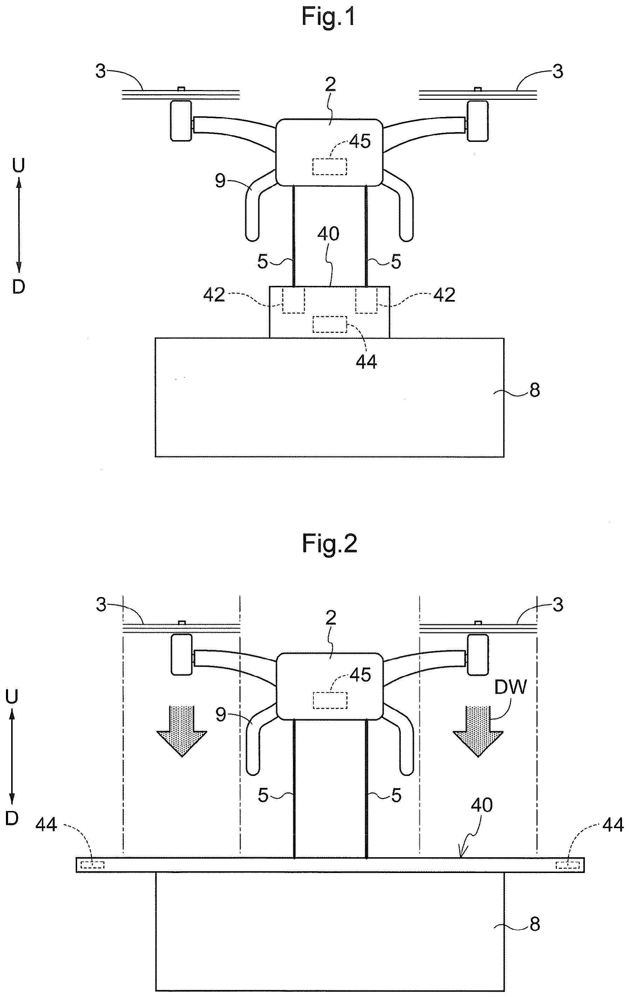

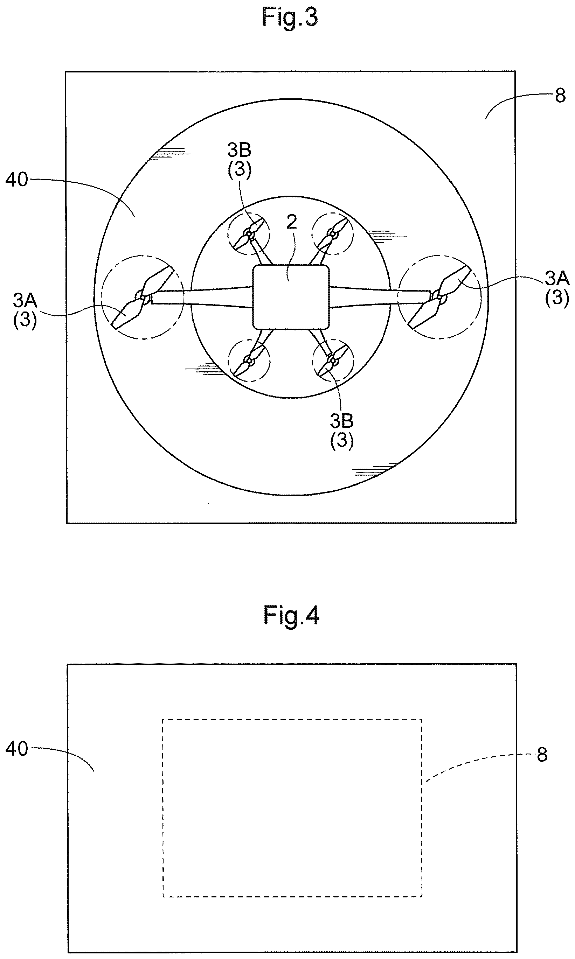

As shown in FIG. 1, a drone, which is an example of an aerial vehicle, has a body portion 2. The body portion 2 includes a plurality of rotors 3 and a support member. The rotors 3 of the drone include main rotors 3A and sub rotors 3B (see FIG. 3). Lift is generated by the main rotors 3A, and the posture of the drone is controlled by the sub rotors 3B. The support member is, for example, one or more wires 5, or may be a rod-like member that can extend and retract and/or can swing around a pivot point. Hereinafter, a configuration in which wires 5 are used as the support member will be described as an example. Each of the wires 5 has one end supported by the body portion 2, and includes a load attachment member 40 having a hook or the like, at the other end. A load 8 is supported by the wires 5 using the load attachment member 40, and is suspended from the body portion 2 of the drone via the wires 5. As a result, the drone can fly with the attached (suspended) load 8. Furthermore, due to adopting a configuration in which the load 8 is suspended, the load 8 can be easily attached and detached. Note that the load attachment member 40 is not limited to a configuration using hooks, and the load 8 can be supported using a desired configuration. The body portion 2 may also include a plurality of leg portions 9 that come into contact with the ground when the drone lands. The leg portions 9 protrude downward (relative to the body portion 2) from the body portion 2.

The load attachment member 40 can support the load 8 and stabilize the posture of the load 8.

When the drone flies with the suspended load 8, the load 8 swings as the drone accelerates, decelerates, or changes direction, and also as a result of downwash DW generated by the rotors 3. The load attachment member 40 can adjust the posture of the swinging load 8, and stabilize the posture of the load 8.

Hereinafter, specific embodiments of the load attachment member 40 will be described with reference to the drawings. Note that in the figures, the U direction is the upward direction and the D direction is the downward direction.

### First Embodiment

As shown in FIG. 1, the drone has the body portion 2 from which the load attachment member 40 is suspended via the wires 5. The load attachment member 40 supports the load 8, thereby enabling the drone to suspend and hold the load 8.

The load attachment member 40 includes adjustment units 42 for adjusting the posture of the load 8. The adjustment units 42 are provided in one-to-one correspondence with the wires 5 and adjust the lengths of the wires 5 from the body portion 2 to the load attachment member 40. The adjustment units 42 are controlled by the posture control unit 45 to adjust the lengths of the wires 5.

For example, if the load attachment member 40 is supported by two wires 5 on the left and the right, and the load 8 (load attachment member 40) is inclined such that the right side is lower, the adjustment unit 42 corresponding to the right wire 5 is controlled so as to shorten the length of the right wire 5. Specifically, the adjustment units 42 can be winding devices, and can adjust the lengths of the wires 5 from the body portion 2 to the load attachment member 40 by winding or unwinding the wires 5.

In this way, the lengths of the wires 5 can be adjusted by the adjustment units 42 in accordance with the posture (inclination) of the load 8 (load attachment member 40). As a result, the inclined load 8 (load attachment member 40) can be returned to a horizontal posture, and the posture of the load 8 can be stabilized.

The load attachment member 40 may include a posture sensor 44. The posture sensor 44 detects the inclination of the load attachment member 40 in the vertical direction (up-down direction/gravity direction), and detects the direction of inclination (front, back, left, right) within the horizontal direction. By detecting the inclination of the load attachment member 40, the posture sensor 44 detects inclination and the direction of inclination of the load 8 suspended (supported) by the load attachment member 40.

In this case, a posture control unit 45 performs communication with the posture sensor 44 and the adjustment units 42 via wired or wireless communication. The posture control unit 45 controls the adjustment units 42 according to the inclination and the direction detected by the posture sensor 44.

The posture sensor 44 may be an inertial measurement unit (IMU), and in this case, relative posture information is obtained based on a three-dimensional angular velocity and an acceleration that were obtained, and the inclination and the direction of the inclination are thus obtained. Furthermore, the posture sensor 44 may be an indoor global positioning system (iGPS), and in this case, the inclination and the direction of inclination can be obtained based on acquired relative position information.

In this manner, the posture (inclination) of the load 8 (load attachment member 40) is detected by the posture sensor 44, and the posture control unit 45 adjusts the adjustment units 42 in accordance with the detection result. In other words, based on the inclination of the load 8, the posture control unit 45 can determine which of the wires 5 is to be adjusted and by what length in order to keep the load 8 horizontal. The posture control unit 45 can select one or more adjustment units 42 and give instructions regarding length adjustment amounts for the wires 5. As a result, based on the posture (inclination) of the load 8 (load attachment member 40), the inclined load 8 (load attachment member 40) can be returned to a horizontal posture more accurately, and the posture of the load 8 can be stabilized more accurately.

### Second Embodiment

As shown in FIG. 2, the load attachment member 40 according to the second embodiment may function as a posture stabilizing member that stabilizes the posture of the load 8 with respect to airflow (downwash DW) generated by the rotors 3. The load attachment member 40 is provided at a position for receiving the downwash DW generated by the rotors 3. For example, the load attachment member 40 (posture stabilizing member) is a plate-shaped member, and is provided such that the flat portion intersects with the wires 5. As long as the load attachment member 40 can sufficiently receive the downwash DW, the load attachment member 40 may be provided with holes, or at least a portion thereof may have a mesh-like configuration.

The load attachment member 40, which functions as a posture stabilizing member, can receive the downwash DW and direct the downwash DW toward the sides of the load 8, thereby suppressing the flow of the downwash DW onto the load 8. This suppresses swinging of the load 8 caused by the downwash DW.

Also, the downwash DW generates force that presses the load attachment member 40 downward. When the load attachment member 40 receives the downwash DW, the load 8 is pressed downward, and swinging of the load 8 is also suppressed.

Note that the planar shape of the load attachment member 40 may be a circle or an ellipse as shown in FIG. 3, or may be a polygon such as a rectangle as shown in FIG. 4, and the planar shape may be a desired shape selected according to the downwash DW and the load 8. Also, the load attachment member 40 may be sized such that the load 8 protrudes beyond the load attachment member 40 in a planar view as shown in FIG. 3, or may be shaped so as to overlap end portions of the load 8 in a planar view and cover the load 8 as shown in FIG. 4.

Furthermore, the load attachment member 40 may be disposed at a position as close to the body portion 2 as possible. By arranging the load attachment member 40 close to the body portion 2 that includes the rotors 3, the load attachment member 40 can more easily receive the downwash DW generated by the rotors 3, and deflect the downwash DW flowing toward the load 8, or suppress flow onto the load 8.

For example, the load attachment member 40 is disposed at a position overlapping the body portion 2 in a side view. In other words, in a side view, an upper end portion of the load attachment member 40 overlaps a lower end portion of the body portion 2. Furthermore, in the case where the body portion 2 includes the leg portions 9, the load attachment member 40 may be disposed at a position overlapping lower end portions of the leg portions 9 in a side view. By arranging the load attachment member 40 at such a position, the load attachment member 40 is disposed at a position close to the rotors 3 of the body portion 2.

### Variations of Second Embodiment

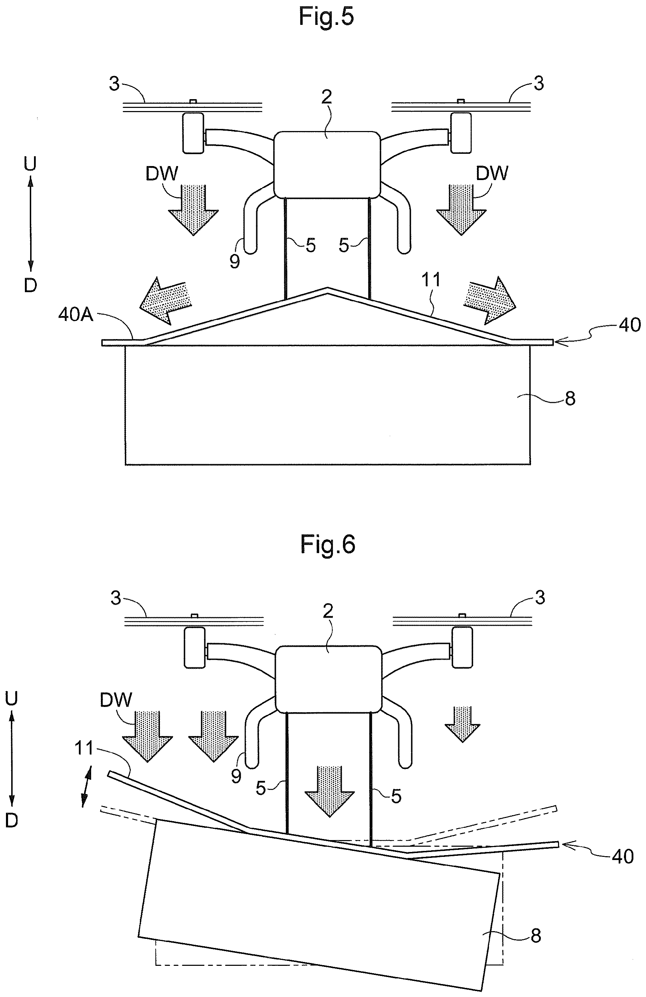

(1) In the second embodiment, it is preferable that the load attachment member 40 includes an inclined portion 11 as shown in FIG. 5. Due to including the inclined portion 11, the load attachment member 40 has an overall upward protruding shape in a side view. In other words, the inclined portion 11 is configured such that the load attachment member 40 moves toward to the body portion 2 while extending from the peripheral portion toward the center.

By providing the load attachment member 40 with the above-described inclined portion 11, the downwash DW flows along the inclined portion 11 and is more like to flow to the region outward of the load 8. As a result, the flow of the downwash DW directly onto the load 8 can be accurately suppressed, and swinging of the load 8 is further suppressed.

Note that the load attachment member 40 may be configured to be gradually inclined from the central region toward the outward ends, or as shown in FIG. 5, the inclined portion 11 may be provided in only a portion of the load attachment member 40. In other words, the load attachment member 40 may be constituted by the inclined portion 11 and a horizontal portion 40A. The load attachment member 40 holds the load 8 using the horizontal portion 40A. Furthermore, the load attachment member 40 may be configured to include a plurality of inclined portions 11 having different inclination angles. This makes it possible to adjust the amount of downwash DW flowing to the sides of the load 8 according to the strength of the downwash DW and the weight, the size, the shape, and the like of the load 8.

(2) In the second embodiment, as shown in FIG. 6, it is preferable that the load attachment member 40 has the inclined portion 11, and the inclined portion 11 can have an overall downward protruding shape in a side view. In other words, the inclined portion 11 is configured such that the load attachment member 40 moves away from the body portion 2 while extending from the peripheral portion toward the central portion.

By providing the load attachment member 40 with the inclined portion 11 having this configuration, the downwash DW can be easily received by the inclined portion 11, and downward force is applied to the load attachment member 40 by the downwash DW. Upon receiving the downwash DW, the load attachment member 40 generates force pressing the load 8. As a result, the load 8 is pressed, and swinging of the load 8 is suppressed.

Furthermore, as the load 8 swings, the load attachment member 40 also becomes inclined. When the load attachment member 40 having the inclined portion 11 becomes inclined, the inclined portion 11 (a portion of the load attachment member 40), which is inclined toward the body portion 2, moves toward the rotors 3, and a larger area receives the downwash DW. Therefore, there is an increase in the force generated when the inclined portion 11 (a portion of the load attachment member 40), which is inclined toward the body portion 2, receives the downwash DW, and force is generated in the direction of returning the inclined load attachment member 40 to the original position. Therefore, swinging of the load 8 is more easily suppressed.

Note that the load attachment member 40 may be configured to be gradually inclined from the central portion toward the end portion, or the inclined portion 11 may be provided in a portion of the load attachment member 40 as shown in FIG. 6. In other words, the load attachment member 40 may be constituted by the inclined portion 11 and the horizontal portion 40A. The load attachment member 40 holds the load 8 using the horizontal portion 40A. Furthermore, the load attachment member 40 may be configured to include a plurality of inclined portions 11 having different inclination angles. Accordingly, the amount of force pressing the load 8, which is generated when the load attachment member 40 receives the downwash DW, can be adjusted according to the strength of the downwash DW and the weight, the size, the shape, and the like of the load 8.

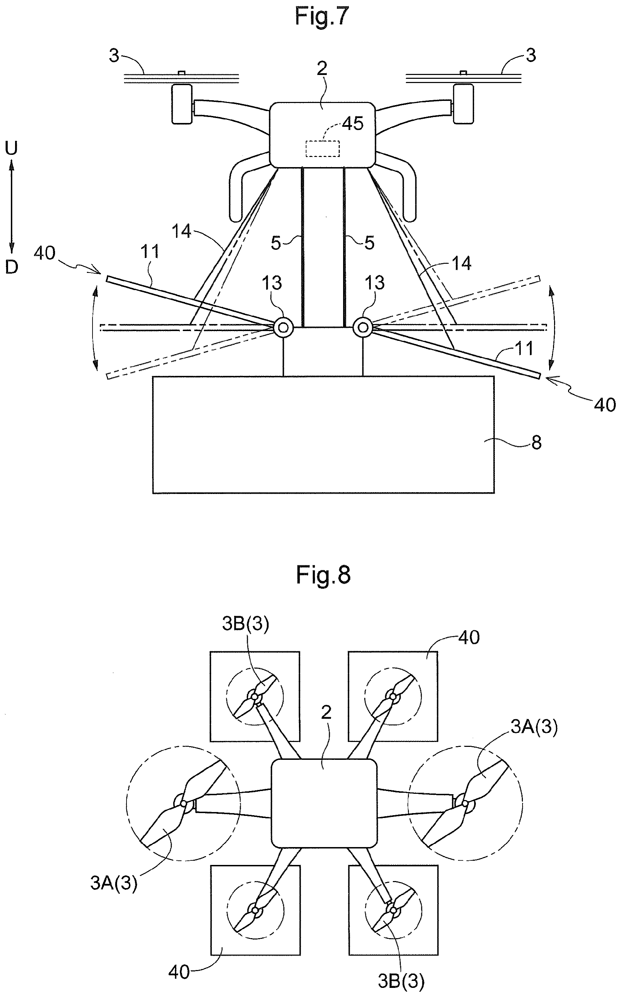

(3) In the load attachment member 40 having the inclined portion 11 shown in Variations 1 and 2 of the second embodiment, as shown in FIG. 7, the load attachment member 40 may be configured such that the inclined portion 11 is formed by deformation of at least a portion of the load attachment member 40. For example, the load attachment member 40 is divided into regions arranged on opposite sides of the horizontal portion 40A, and hinges 13 are provided at the boundaries between the horizontal portion 40A and the regions. At least a portion of each of the separated regions constitutes the inclined portion 11, and a length adjustment member 14 is connected to the inclined portion 11 at a position laterally outward of the hinge 13. The length adjustment member 14 has one end connected to the inclined portion 11 and the other end connected to the drone (e.g., the body portion 2). The length of the length adjustment member 14 can be adjusted, and the angle of the inclined portion 11 can be adjusted by adjusting the length of the length adjustment member 14. As a result, it is possible to achieve a state in which no inclined portion 11 is formed, and it is possible to form the inclined portion 11 that moves closer to the body portion 2 while extending toward the central portion, as well as the inclined portion 11 that moves away from the body portion 2 while extending toward the central portion. Also, since it is possible to also adjust the inclination angle of the inclined portion 11, the downwash DW can be adjusted as required.

(4) In Variation 3 of the second embodiment, the load attachment member 40 may include the above-described posture sensor 44. The posture sensor 44 detects the inclination of the load attachment member 40 in the vertical direction (up-down direction/gravity direction), and detects the direction of inclination (front, back, left, right) within the horizontal direction. By detecting the inclination of the load attachment member 40, the posture sensor 44 detects inclination and the direction of inclination of the load 8 attached to (supported by) the load attachment member 40.

In this case, the drone includes the posture control unit 45, and the posture control unit 45 performs communication with the posture sensor 44 via wired or wireless communication. The posture control unit 45 adjusts the lengths of the length adjustment members 14 according to the inclination and direction detected by the posture sensor 44 to change the inclination angles of the inclined portions 11 (to deform the inclined portions 11).

The posture sensor 44 may be the above-mentioned inertial measurement unit (IMU) or the above-mentioned indoor global positioning system (iGPS).

In this manner, the posture (inclination) of the load 8 (load attachment member 40) is detected by the posture sensor 44, and the posture control unit 45 adjusts the inclination angles of the inclined portions 11 in accordance with the detection result. In other words, based on the inclination of the load 8, the posture control unit 45 can determine which of the length adjustment members 14 is to be lengthened or shortened and by what amount in order to keep the load 8 horizontal. The posture control unit 45 can select one or more length adjustment members 14 and give instructions regarding length adjustment amounts for the length adjustment members 14. As a result, based on the posture (inclination) of the load 8 (load attachment member 40), the inclined load 8 (load attachment member 40) can be returned to a horizontal posture more accurately, and the posture of the load 8 can be stabilized more accurately.

(5) In the above-described variations of the second embodiment, as shown in FIGS. 2, 8, and 9, the load attachment member 40 may be configured to include a portion that overlaps the rotors 3 in a plan view. In other words, the load attachment member 40 or the inclined portion 11 may be provided at least directly below the rotors 3. Since the downwash DW flows downward from the rotors 3, by providing the load attachment member 40 directly below the rotors 3, the downwash DW can be efficiently received and deflected (FIG. 5), and the downwash DW can be efficiently used to generate downward force (FIG. 6).

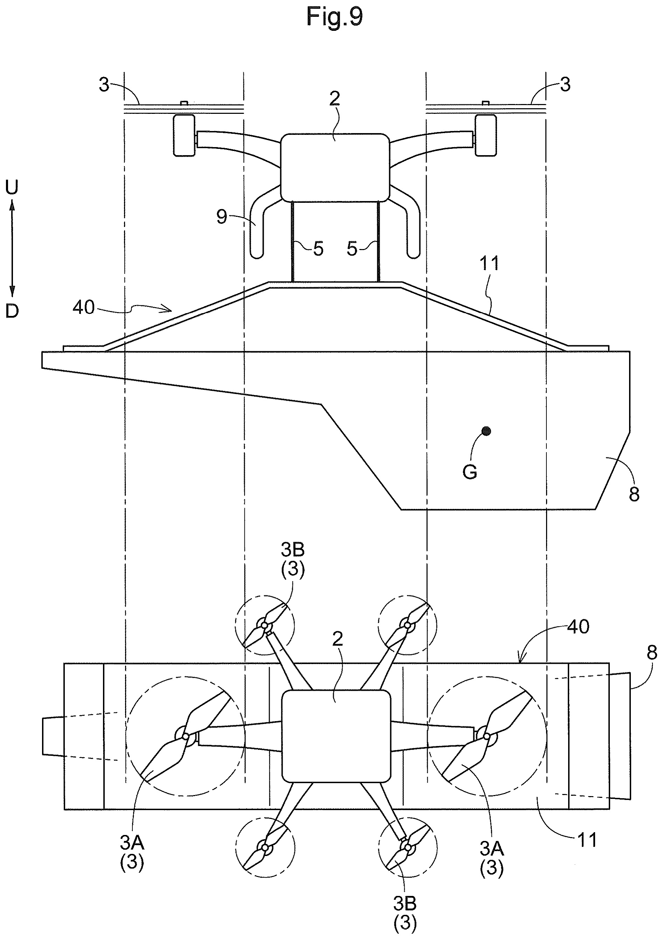

(6) In the variations of the second embodiment, as shown in FIGS. 3 and 9, out of the main rotors 3A and the sub rotors 3B, the load attachment member 40 may be configured to overlap at least the main rotors 3A in a plan view, or may be configured to overlap only the main rotors 3A and not overlap the sub rotors 3B. The main rotors 3A generate more downwash DW than the sub rotors 3B. By providing the load attachment member 40 directly below the main rotors 3A, the size of the load attachment member 40 can be minimized while also efficiently deflecting the downwash DW and efficiently generating downward force by the downwash DW.

Conversely, as shown in FIG. 8, the load attachment member 40 may be configured to overlap at least the sub rotors 3B, or may be configured to overlap only the sub rotors 3B.

Also, as shown in FIG. 8, the load attachment member 40 may be configured to be divided into a plurality of members. For example, a single load attachment member 40 may overlap at least the main rotors 3A or at least the sub rotors 3B, or independent load attachment members 40 may be provided directly below respective rotors 3. This allows the load attachment members 40 to be provided efficiently in accordance with the configuration of the rotors 3. In this case, the load attachment member 40 may be configured to be separable, and the portions of the divided load attachment member 40 may be configured to be movable in the horizontal direction. This allows each of the divided portions of the load attachment member 40 to be moved individually to a position directly below at least one of the main rotors 3A and the sub rotors 3B as necessary.

### Alternative Embodiments

(1) In the above embodiments, it is preferable that the load 8 is attached such that a center of gravity G of the load 8 is located below at least one of the main rotors 3A, as shown in FIG. 9. In other words, the load 8 is attached such that the center of gravity G of the load 8 is overlapped with one of the main rotors 3A in a plan view. This makes it easier to stabilize the load 8 during flight. In particular, in the case where the load attachment member 40 functions as a posture stabilizing member, the downwash DW is blown toward the center of gravity G of the load 8, thereby efficiently stabilizing the load 8.
(2) In the above embodiments, the drone may include an engine as a motive power source. Additionally, the drone can include a generator in addition to the engine. The generator generates electric power using motive power output from the engine. Also, a battery can be provided, and electric power generated by the generator may be stored in the battery. The rotors 3 are driven by motive power generated by the engine, electric power generated by the generator, or electric power stored in the battery. For example, the main rotors 3A operate using motive power from the engine, and the sub rotors 3B operate using electric power generated by the generator or electric power stored in the battery.

Furthermore, adjustment of the length of the wires 5 and deformation of the inclined portions 11 by adjusting the length of the length adjustment members 14 may be performed using electric power generated by the generator or electric power stored in the battery. Specifically, the adjustment units 42 may be driven by electric power generated by the generator or electric power stored in the battery. The posture control unit 45 may operate using electric power generated by the generator or electric power stored in the battery so as to control the deformation of the inclined portions 11 and the adjustment units 42.

(3) In the above embodiments, the aerial vehicle is not limited to a drone, and may be any aerial vehicle that has the rotors 3 and can suspend the load 8.

### Industrial Applicability

The present invention is applicable to any aerial vehicle that has rotors and is capable of suspending a load.

### Description of Reference Signs

- 2: Body portion
- 3: Rotor
- 3A: Main rotor
- 3B: Sub rotor
- 5: Wire (support member)
- 8: Load
- 40: Load attachment member
- 44: Posture sensor
- DW: Downwash (airflow)
- G: Center of gravity

## Claims

1. An aerial vehicle configured to fly while carrying a load, the aerial vehicle comprising:
a body portion having a plurality of rotors; and
a load attachment member configured to be connected to the body portion, support the load, and adjust a posture of the load.

2. The aerial vehicle according to claim 1,
wherein the load attachment member is supported by the body portion via a plurality of support members, and
the load attachment member adjusts the posture of the load by adjusting a length of at least one of the support members from the body portion to the load attachment member.

3. The aerial vehicle according to claim 1 or 2, further comprising:
a posture sensor configured to detect the posture of the load,
wherein the load attachment member adjusts the posture of the load based on a detection result of the posture sensor.

4. The aerial vehicle according to claim 1,
wherein the load attachment member stabilizes the posture of the load with use of airflow generated by the rotors.

5. The aerial vehicle according to claim 4,
wherein the load attachment member includes an inclined portion inclined in such a manner as to move toward the body portion while extending toward a central portion of the load attachment member.

6. The aerial vehicle according to claim 4,
wherein the load attachment member includes an inclined portion inclined in such a manner as to move away the body portion while extending toward a central portion of the load attachment member.

7. The aerial vehicle according to claim 5 or 6,
wherein the load attachment member has at least a part that is deformable, and is further configured to deform between a state in which the inclined portion is formed and a state in which the inclined portion is not formed.

8. The aerial vehicle according to claim 7, further comprising:
a posture sensor configured to detect the posture of the load,
wherein the inclined portion of the load attachment member becomes deformed based on a detection result of the posture sensor.

9. The aerial vehicle according to any one of claims 4 to 8,
wherein the load attachment member includes at least a portion overlapped with at least one of the rotors in a plan view.

10. The aerial vehicle according to claim 9,
wherein the plurality of rotors include a main rotor and a sub rotor, and
the load attachment member is overlapped with the main rotor in a plan view.

11. The aerial vehicle according to claim 9,
wherein the plurality of rotors include a main rotor and a sub rotor, and
the load attachment member is overlapped with the sub rotor in a plan view.

12. The aerial vehicle according to any one of claims 4 to 11,
wherein the load attachment member is configured by a plurality of members.

13. The aerial vehicle according to any one of claims 4 to 12,
wherein the plurality of rotors include a main rotor and a sub rotor, and
the load is carried in such a manner as to have a center of gravity overlapped with the main rotor in a plan view.
